# EUROPEAN PATENT APPLICATION

(11) **EP 4 494 716 A1**
(43) Date of publication of application: **22.01.2025**
(21) Application number: 24186679.7
(22) Date of filing: 04.07.2024
(51) Int. Cl.: A62C 3/16, A62C 37/11, A62C 35/10

(54) **BATTERY PACK FIRE EXTINGUISHING SYSTEM AND METHOD**

(30) Priority: 21.07.2023 KR 20230095243
(71) Applicant: SAMSUNG SDI CO., LTD., Giheung-gu Yongin-si, Gyeonggi-do 17084 (KR)
(72) Inventor: NA, Don Ju, 17084 Yongin-si (KR)
(74) Representative: Marks & Clerk LLP

(57) **Abstract**

A battery pack fire extinguishing system includes one or more battery cells, a fire extinguishing pipe located above the one or more battery cells and holding a first fire extinguishing agent at atmospheric pressure. A fire extinguishing agent supply unit is connected to the fire extinguishing pipe to supply a second fire extinguishing agent to the fire extinguishing pipe at a pressure higher than the atmospheric pressure.

## Description

### BACKGROUND

### 1. Field

Embodiments of the present disclosure relate to a battery pack fire extinguishing system and method for filling the extinguishing system with a fire extinguishing agent.

### 2. Description of the Related Art

A direct-spray-type fire extinguishing system is applied to energy storage systems (e.g., battery packs) in order to prevent thermal propagation in the event of a fire. A direct-spray-type fire extinguishing system contributes to improved fire safety for battery packs. As the capacity of a battery cell increases, the size of a flame and the explosive power may increase. Therefore, it is desirable to improve fire-extinguishing-agent direct spray performance of a direct-spray-type fire extinguishing system of a battery pack.

If a direct-spray-type fire extinguishing system operates upon detecting fire after occurrence of thermal runaway of a battery cell, it may take a predetermined amount of time (e.g., about 10 seconds to about 20 seconds) for a fire extinguishing agent to reach the fire through a fire extinguishing pipe, which makes it difficult to extinguish the fire at an early stage. The delay may cause damage to the fire extinguishing pipe by a strong flame, leading to thermal runaway (e.g., an uncontrollable increase in temperature) of battery cells.

The information disclosed in this section is provided only for enhancement of understanding of the background of the disclosure and therefore it may contain information that does not form the related art.

### SUMMARY

Embodiments of the present disclosure provide a battery pack fire extinguishing system configured to shorten a direct spray operation time, and a method of filling the same with a fire extinguishing agent.

An embodiment of the present disclosure is directed to a battery pack fire extinguishing system that includes one or more battery cells, a fire extinguishing pipe located above the one or more battery cells and holding a first fire extinguishing agent at atmospheric pressure, and a fire extinguishing agent supply unit connected to the fire extinguishing pipe to supply a second fire extinguishing agent to the fire extinguishing pipe at a pressure higher than the atmospheric pressure.

In one or more embodiments, at least one of the first fire extinguishing agent or the second fire extinguishing agent may include sodium bicarbonate, potassium bicarbonate, ammonium phosphate, or aluminium sulfate.

In one or more embodiments, the fire extinguishing pipe may include a first fire extinguishing pipe located above the one or more battery cells and a second fire extinguishing pipe connecting the first fire extinguishing pipe to the fire extinguishing agent supply unit.

In one or more embodiments, the first fire extinguishing pipe may include one or more spray holes corresponding to one or more vent holes in the one or more battery cells and a film over the spray holes. The melting point of the film may be lower than the melting point of the first fire extinguishing pipe.

In one or more embodiments, the film may be configured to melt responsive to vent gas from the battery cells.

In one or more embodiments, the battery pack fire extinguishing system may further include a gas intake sensor configured to detect a vent gas from the battery cells and a controller configured to drive a cylinder trigger of the fire extinguishing agent supply unit based on receiving a gas intake signal from the gas intake sensor.

In one or more embodiments, based on detecting operation of the cylinder trigger, the first fire extinguishing agent charged in the fire extinguishing pipe is configured to be sprayed to the battery cells at a first point in time, and the second fire extinguishing agent charged in the fire extinguishing agent supply unit is configured to be sprayed to the battery cells through the fire extinguishing pipe at a second point in time later than the first point in time.

In one embodiment, a method of filling a battery pack fire extinguishing system with a fire extinguishing agent may include providing a fire extinguishing pipe located above one or more battery cells and connected to a fire extinguishing agent supply unit, connecting a vacuum pump and a fire extinguishing agent tank to the fire extinguishing pipe via one or more connection pipes, driving the vacuum pump to vacuum the fire extinguishing pipe, and driving the fire extinguishing agent tank to provide a fire extinguishing agent to the fire extinguishing pipe.

In one or more embodiments, the fire extinguishing agent may be injected into the fire extinguishing pipe until an interior of the fire extinguishing pipe is in an atmospheric pressure state.

In one or more embodiments, the one or more connection pipes may include a first connection pipe connected to the fire extinguishing pipe, a second connection pipe connecting the vacuum pump to the first connection pipe, a third connection pipe connecting the fire extinguishing agent tank to the first connection pipe, and a first valve placed where the first, second, and third connection pipes meet. Operation of the vacuum pump connects the first connection pipe and the second connection pipes to each other via operation of the first valve, and disconnects the first connection pipe and the third connection pipe from each other. Operation of the fire extinguishing agent tank connects the first connection pipe and the third connection to each other via operation of the first valve, and disconnects the first connection pipe and the second connection from each other.

In one or more embodiments, the one or more connection pipes may further include a second valve placed where the fire extinguishing pipe and the first connection pipe meet. Operation of the vacuum pump or the fire extinguishing agent tank connects the fire extinguishing pipe and the first connection pipe to each other via operation of the second valve, and stopping operation of the vacuum pump and the fire extinguishing agent tank disconnects the fire extinguishing pipe and the first connection pipe from each other via operation of the second valve.

At least some of the above and other features of the invention are set out in the claims.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of embodiments that follows, and the disclosure is not to be construed as limited to what is shown in such drawings. In the drawings:
FIG. 1(A) is a side view of a battery cell according to an embodiment of the present disclosure;
FIG. 1(B) is a plan view of the battery cell according to the embodiment of FIG. 1A;
FIG. 2 is a schematic plan view of a battery module according to an embodiment of the present disclosure;
FIG. 3 is a schematic side view of the battery module according to the embodiment of FIG. 2;
FIG. 4 is a block diagram of the configuration of a battery pack fire extinguishing system configured to shorten a direct spray operation time according to an embodiment of the present disclosure;
FIGs. 5A and 5B are schematic views of battery cells in relation to a fire extinguishing pipe in the battery pack fire extinguishing system of FIG. 4 configured to shorten a direct spray operation time according to an embodiment of the present disclosure;
FIG. 6 is a block diagram of the configuration of the battery pack fire extinguishing system of FIG. 4 configured to shorten a direct spray operation time according to an embodiment of the present disclosure;
FIG. 7 is a schematic diagram of an operation of the battery pack fire extinguishing system of FIG. 4 configured to shorten a direct spray operation time according to an embodiment of the present disclosure;
FIG. 8 is a flowchart of a method of filling the battery pack fire extinguishing system of FIG. 4 configured to shorten a direct spray operation time with a fire extinguishing agent according to an embodiment of the present disclosure; and
FIG. 9 is a schematic diagram of the method of FIG. 8 of filling the battery pack fire extinguishing system of FIG. 4 configured to shorten a direct spray operation time with a fire extinguishing agent according to an embodiment of the present disclosure.

### DETAILED DESCRIPTION

Hereinafter, embodiments of the present disclosure will be described in detail with reference to the accompanying drawings, to more fully illustrate the disclosure to a person having ordinary skill in the art. The following embodiments may be modified in various other forms without departing form the scope of the present disclosure. Thus, the disclosure is not limited to the embodiments described herein. Rather, the embodiments of the present disclosure are provided to make the disclosure more thorough and complete, and to completely convey the present disclosure fully to those skilled in the art.

In the figures, dimensions of the various elements, layers, etc. may be exaggerated clarity of illustration. The same reference symbols or numerals in the drawings designate the same elements. As used herein, the term "and/or" includes any and all combinations of one or more of the associated listed items. As used herein, the term "connected" refers not only to direct connection between members A and B but also to indirect connection between members A and B with member C interposed therebetween. Thus, it will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The terms used in the specification are intended to describe embodiments of the present disclosure and are not intended to limit the disclosure. As used herein, singular forms "a" and "an" are intended to include plural forms as well, unless the context clearly indicates otherwise. As used herein, the terms "comprise" (or "include") and/or "comprising" (or "including") are intended to specify the presence of stated figures, integers, numbers, steps, operations, members, elements, components, and/or groups thereof and do not exclude the presence or addition of one or more other features, integers, figures, numbers, steps, operations, members, elements, and/or groups thereof.

While terms such as "first", "second," etc. are used herein to describe various elements, components, members, parts, regions, layers, sections, and/or portions, the elements, components, members, parts, regions, layers, sections, and/or the portions are not to be limited by the terms. The terms are used to distinguish one element, component, member, part, region, layer, section, or portion from another element, component, member, part, region, layer, section, or portion. Thus, a first element, component, member, part, region, layer, section, or portion hereinafter described may refer to a second element, component, member, part, region, layer, section, or portion without departing from the teachings of the present disclosure.

Spatially relative terms, such as "beneath," "below," "lower," "above," "upper," and the like, may be utilized to facilitate understanding of one element or feature shown in the drawings as different from another element or feature. The spatially relative terms are intended to encompass different orientations of the device in addition to the orientation depicted in the figures, and are intended to facilitate understanding of the disclosure in various states of process or use and are not intended to limit the disclosure. For example, if an element or feature in a figure is inverted, an element or feature described as "beneath" or "below" other elements or features would then be oriented "above," "over," or "upper" the other elements of features. Thus, the term "beneath" or "below" is a concept that encompasses both an orientation above and below. The device may be otherwise oriented (rotated 90 degrees or at other orientations), and the spatially relative descriptors used herein should be interpreted accordingly.

Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

In addition, a control unit (e.g., controller) and/or other related devices or parts according to embodiments of the present disclosure may be implemented using any suitable hardware, firmware (e.g., application-specific semiconductor), software, or a suitable combination of software, firmware, and hardware. For example, various components of the control unit (e.g., the controller) and/or other related devices or parts according to the embodiments of the present disclosure may be formed on one integrated circuit chip or on separate integrated circuit chips. In addition, various components of the control unit (e.g., the controller) may be implemented on a flexible printed circuit film or may be formed on a tape carrier package, a printed circuit board, or the same substrate as the control unit (e.g., the controller). In addition, various components of the control unit (e.g., the controller) may be implemented as a process or thread, running on one or more processors in one or more computing devices, and may execute computer program instructions and may interact with other components in order to perform various functions to be described hereinbelow. The computer program instructions are stored in a memory that may be implemented in a computing device using a standard memory device such as, for example, a random access memory, read only memory, or any other volatile or nonvolatile memory device. The computer program instructions may also be stored in other non-transitory computer readable media such as, for example, a CD-ROM, flash drive, solid state drive (SSD), and/or the like. Also, a person skilled in the art should recognize that the functions of various computing devices may be combined with each other or integrated into a single computing device, or the function of a particular computing device may be distributed across one or more other computing devices without departing from the scope of the embodiments.

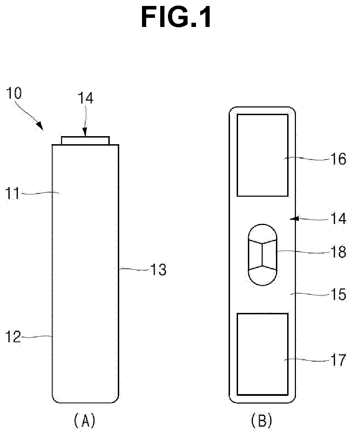

FIG. 1(A) is a side view of a battery cell 10 according to an embodiment of the present disclosure, and FIG. 1(B) is a plan view of the battery cell 10 according to the embodiment of FIG. 1A. Referring to FIG. 1, the battery cell 10 according to some embodiments may include a case 11 configured to accommodate an electrode assembly. An electrolyte (liquid, gel, or solid electrolyte) may be accommodated in the case 11. The battery cell 10 according to some embodiments may include a cap assembly 14 configured to seal an opening of the case 11. The battery cell 10 according to some embodiments is a lithium ion secondary battery formed in a prismatic shape, although embodiments are not limited thereto.

The electrode assembly may be implemented as a jelly-roll-type electrode assembly formed by winding a positive electrode and a negative electrode with a separator interposed therebetween, or as a stack-type electrode assembly formed by stacking the positive electrode and the negative electrode with the separator interposed therebetween. Each of the positive electrode and the negative electrode may include a coated area of a current collector formed as a thin metal foil on which an active material may be coated and an uncoated area of the current collector on which no active material is coated. As a non-limiting example, the coated area of the positive electrode may be formed by coating an active material such as a transition metal oxide on a substrate formed as a metal foil such as an aluminium foil. The coated area of the negative electrode may be formed by coating an active material such as carbon or graphite on a substrate formed as a metal foil such as a copper foil or a nickel foil.

The uncoated area of the positive electrode may be formed on one end portion of the positive electrode in the longitudinal direction of the positive electrode, and the uncoated area of the negative electrode may be formed on one end portion of the negative electrode in the longitudinal direction of the negative electrode. The uncoated area of the positive electrode and the uncoated area of the negative electrode may be located on sides opposite each other with respect to the coated area. The separator may include a plurality of separators. After being alternately placed, the positive electrode, the negative electrode, and the separator may be wound or stacked.

The electrode assembly may be accommodated in the case 11 together with an electrolyte. The electrolyte may include an organic solvent such as ethylene carbonate (EC), propylene carbonate (PC), diethyl carbonate (DEC), ethyl methyl carbonate (EMC), or dimethyl carbonate (DMC) and a lithium salt such as LiPF₆ or LiBF₄. The case 11 may be formed to have a substantially rectangular parallelepiped shape, and may include an opening formed in one surface thereof. The case 11 may be formed of metal such as aluminium or stainless steel.

The case 11 may include a bottom surface having a substantially rectangular shape, and may include a pair of first sidewalls 12 and 13 as wide side surfaces and a pair of second sidewalls connected perpendicularly to (e.g., extending from) end portions of the bottom surface in order to provide a space for accommodating the electrode assembly. The first sidewalls 12 and 13 may be located so as to face each other, and the second sidewalls may be located so as to face each other and may be connected to (e.g., extend from) the first sidewalls 12 and 13. The length of each of the edges at which the bottom surface and the first sidewalls 12 and 13 are connected to each other may be greater than the length of each of the edges at which the bottom surface and the second sidewalls are connected to each other. In some embodiments, round regions are formed between the first and second sidewalls adjacent to each other.

The cap assembly 14 may include a cap plate 15 coupled to the case 11 to cover the opening in the case 11, and may include a positive electrode terminal (first terminal) 16 and a negative electrode terminal (second terminal) 17 protruding outward from the cap plate 15 and electrically connected to the positive electrode and the negative electrode, respectively. The cap plate 15 may be formed in the shape of a plate extending in one direction and may be coupled to the opening of the case 11. The cap plate 15 may include a vent hole 18 (e.g., a vent opening) communicating with the interior of the cap assembly 14. A vent including a notch, which may open due to a pressure (e.g., predetermined pressure), may be mounted to or placed at the vent hole 18 or in the vent hole 18.

The positive electrode terminal 16 and the negative electrode terminal 17 may be mounted or placed so as to protrude upwardly from the cap plate 15. The positive electrode terminal 16 may be electrically connected to the positive electrode via a current collecting tab, and the negative electrode terminal 17 may be electrically connected to the negative electrode via a current collecting tab. A terminal connector configured to electrically connect the positive electrode terminal 16 to the current collecting tab may be mounted or placed between the positive electrode terminal 16 and the current collecting tab. The terminal connector may be inserted into a hole formed in the positive electrode terminal 16 and may be welded at a lower portion thereof to the current collecting tab.

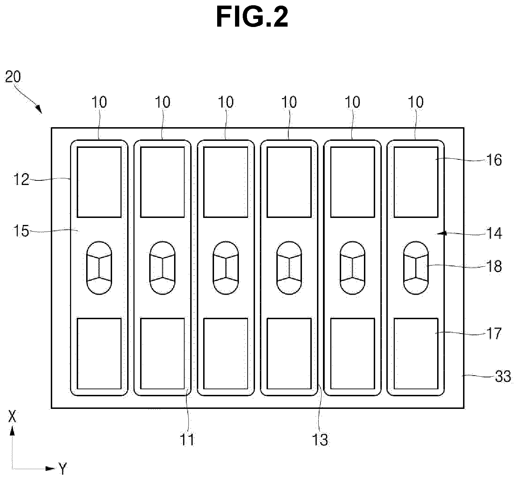

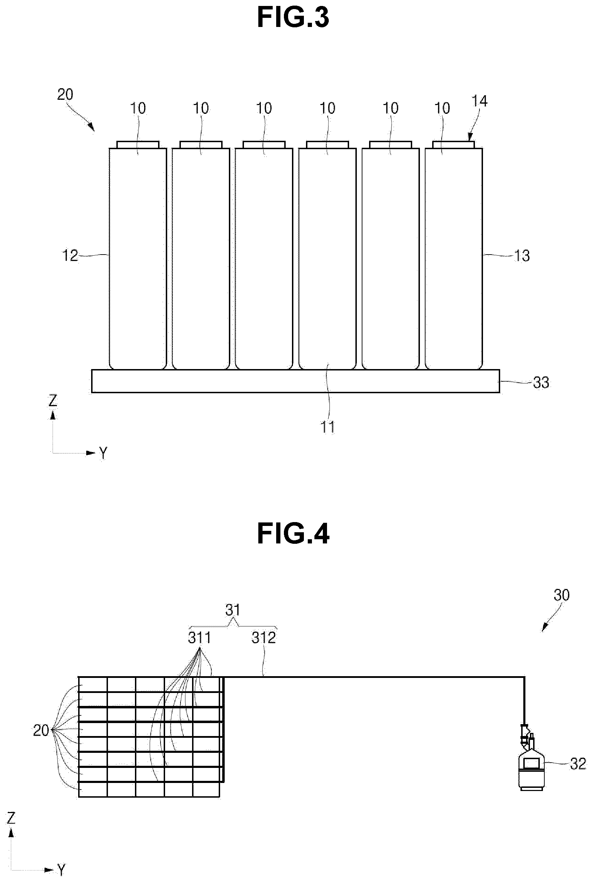

FIG. 2 is a schematic plan view of a battery module 20 according to an embodiment of the present disclosure, and FIG. 3 is a schematic side view of the battery module 20 according to the embodiment of FIG. 2.

Referring to FIGs. 2 and 3, the battery module 20 may include a plurality of battery cells 10 arranged and aligned in a first direction, e.g., a Y direction. Each of the battery cells 10 may be a prismatic (or rectangular) cell 10, and the first sidewalls 12 and 13 of the cells 10 may be stacked together to form the battery module 20. For example, the prismatic battery cells 10 may be arranged such that the first sidewalls 12 and 13 of adjacent battery cells 10 face each other and/or are in close contact with each other. Spacers (not shown) made of an organic/inorganic material to minimize or prevent thermal propagation may be located between the first sidewalls 12 and 13 of adjacent cells 10. The positive and negative electrode terminals 16 and 17 of adjacent battery cells 10 may be electrically connected to each other via bus bars (not shown). The plurality of battery cells 10 may be electrically connected to each other in a bundle, whereby the battery module 20 may be used as a power source. A plurality of battery modules 20 may be electrically connected to each other to form a battery pack, and the battery pack may be used as a power source. In some embodiments, a plurality of battery modules 20 or a plurality of battery packs may be referred to as an energy storage device.

In some embodiments, each of the battery cells 10 includes a vent hole 18 in the cap assembly 14 at a distance from the positive electrode terminal 16 and the negative electrode terminal 17. The vent holes 18 in the plurality of battery cells 10 arranged in the first direction may also be arranged in the first direction. The plurality of battery cells 10 may be located on a carrier plate 33, which is formed to support the weight of the plurality of battery cells 10 and to cool the plurality of battery cells 10. In some embodiments, the carrier plate 33 may include a cooler (e.g., a cooling mechanism) or may be referred to as a cooler.

FIG. 4 is a block diagram of the configuration of a battery pack fire extinguishing system 30 configured to shorten a direct spray operation time according to an embodiment of the present disclosure.

As shown in FIG. 4, the battery pack fire extinguishing system 30 includes battery cells 10, a fire extinguishing pipe 31, and a fire extinguishing agent supply unit 32.

The battery cells 10 may be implemented in the form of battery modules 20, as described above. In some embodiments, the battery modules 20 may be arranged in rows and columns and thus may be provided in the form of a battery pack. In other embodiments, the battery modules 20 may be secured to a rack while being arranged in rows and columns and thus may be provided in the form of a battery rack.

One end of the fire extinguishing pipe 31 may be located above the battery module, the battery pack, or the battery rack, and the other end thereof may be connected to (e.g., extend from) the fire extinguishing agent supply unit 32. The fire extinguishing pipe 31 may be in the form of a circular pipe or a rectangular pipe. The fire extinguishing pipe 31 may be located above the battery module 20 and may extend approximately parallel to the longitudinal direction (Y direction) of the battery module 20. In some embodiments, the fire extinguishing pipe 31 may be made of aluminium, copper, stainless steel, or resin.

The fire extinguishing pipe 31 may include a first fire extinguishing pipe 311 located above the battery module 20 and a second fire extinguishing pipe 312 connecting the first fire extinguishing pipe 311 to the fire extinguishing agent supply unit 32. In some embodiments, a plurality of first fire extinguishing pipes 311 may be provided so as to branch from one second fire extinguishing pipe 312. In some embodiments, the longitudinal direction of the second fire extinguishing pipe 312 may be similar or identical to the direction (e.g., Y direction) in which the vent holes 18 are arranged in the battery cells 10.

The fire extinguishing pipe 31 holds (e.g., is filled) with a first fire extinguishing agent 313 at atmospheric pressure. For example, the first fire extinguishing agent 313 may be charged in advance in the fire extinguishing pipe 31 at atmospheric pressure (e.g., without being pressurized). In some embodiments, both the first fire extinguishing pipe 311 and the second fire extinguishing pipe 312 may hold (e.g., be filled) with the first fire extinguishing agent 313 at atmospheric pressure. Here, "pressurization" may mean application of a pressure higher than atmospheric pressure.

The fire extinguishing agent supply unit 32 is connected to (e.g., extend from) the fire extinguishing pipe 31 (e.g., the second fire extinguishing pipe 312) to supply a second fire extinguishing agent to the fire extinguishing pipe 31 at a pressure higher than atmospheric pressure. The fire extinguishing agent supply unit 32 may include a pressure-accumulation-type fire extinguisher or a gas-pressurization-type fire extinguisher. In some embodiments, the fire extinguishing agent supply unit 32 may include a cylinder trigger configured to pressurize a fire extinguishing agent or material stored therein and supply the same to the outside in response to external electrical and/or mechanical signals.

In some embodiments, the first and second fire extinguishing agents or materials may include powders or liquids. In some embodiments, the first and second fire extinguishing agents may include sodium bicarbonate, potassium bicarbonate, ammonium phosphate, or aluminium sulfate as a component (e.g., a main component). In some embodiments, the first and second fire extinguishing agents may include different materials or the same material. In some embodiments, the first fire extinguishing agent may include a material that does not deteriorate in the fire extinguishing pipe 31 for a period of time (e.g., a long period of time of about 10 to 20 years), and the second fire extinguishing agent may include a material having fire extinguishing properties.

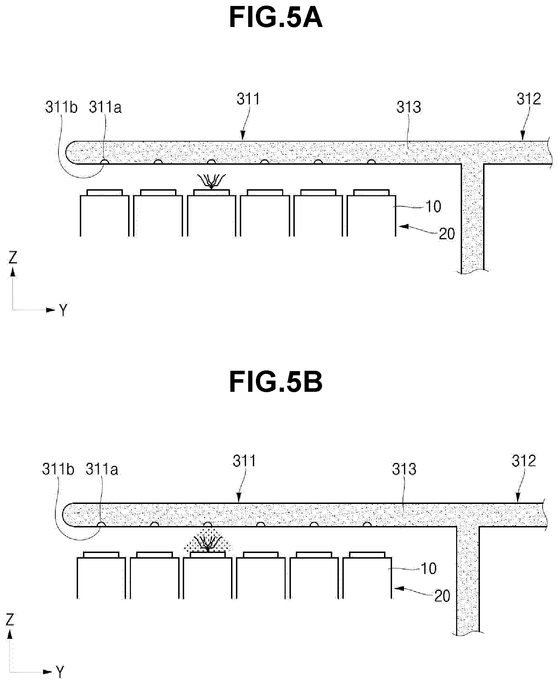

FIGs. 5A and 5B are schematic views of the battery cells 10 in relation to the fire extinguishing pipe 31 in the battery pack fire extinguishing system 30 configured to shorten a direct spray operation time according to an embodiment of the present disclosure.

FIG. 5A is a view of a battery cell 10 in a state where a vent gas jet is discharged through the vent hole 18, and FIG. 5B is a view of the battery cell in which the first fire extinguishing agent 313 charged in the first fire extinguishing pipe 311 at atmospheric pressure is sprayed (e.g., directly) to the vent hole 18 through a part of the first fire extinguishing pipe 311 corresponding to the vent gas jet.

In the battery pack fire extinguishing system 30 according to the embodiment shown in FIGs. 5A and 5B, the first fire extinguishing pipe 311 may include spray holes (e.g., spray openings) 311a and a film 311b.

The spray holes 311a may be formed in regions of the first fire extinguishing pipe 311 corresponding to the vent holes 18 in the battery cells 10. In some embodiments, the shape of the spray holes 311a may correspond to the shape of the vent holes 18. For example, if the shape of the vent holes 18 is circular, the shape of the spray holes 311a may also be circular, and if the shape of the vent holes 18 is elliptical, the shape of the spray holes 311a may also be elliptical. In some embodiments, the size of the spray holes 311a may be similar or identical to the size of the vent holes 18.

The film 311b may be placed over (e.g., block) the spray holes 311a. In some embodiments, the film 311b may be coated on or adhered to the first fire extinguishing pipe 311 to cover (e.g., block) the spray holes 311a or may be formed as plugs coupled to the spray holes 311a.

In some embodiments, the melting point of the film 311b may be lower than the melting point of the first fire extinguishing pipe 311. In some embodiments, the film 311b may be melted by the vent gas jetted from the battery cell 10. In some embodiments, the film 311b may include polyethylene (PE), polypropylene (PP), polyvinyl chloride (PVC), polystyrene (PS), acrylonitrile butadiene styrene copolymer (ABS) resin, acrylonitrile styrene copolymer (AS) resin, polymethyl methacrylate (PMMA), polyvinyl alcohol (PVA), or polyvinylidene chloride (PVDC).

In some embodiments, the melting temperature of the film 311b may be about 150 °C. If the temperature of the vent gas exceeds 150 °C, the film 311b may melt. If the film 311b melts, the spray hole 311a may be opened. Thus, the first fire extinguishing agent 313 in the first fire extinguishing pipe 311 may be primarily sprayed (e.g., sprayed first at a first point in time) to the vent hole 18 in the battery cell 10 through the spray hole 311a. The second fire extinguishing agent from the fire extinguishing agent supply unit 32 may be secondarily sprayed (e.g., sprayed second at a second point in time later than the first point in time) to the vent hole 18 in the battery cell 10 through the spray hole 311a in the first fire extinguishing pipe 311. For example, the first fire extinguishing agent 313 charged (e.g., in advance) in the first fire extinguishing pipe 311 at atmospheric pressure may be primarily sprayed (e.g., sprayed first) by being pushed by the second fire extinguishing agent supplied from the fire extinguishing agent supply unit 32, and then the second fire extinguishing agent may be secondarily sprayed (e.g., sprayed second).

As described above, because the positions of the spray holes 311a formed in the first fire extinguishing pipe 311 correspond to the positions of the battery cells 10 (e.g., positions of the vent holes 18), the first and second fire extinguishing agents may be sprayed to a battery cell 10 in which an event (e.g., fire) occurs through the spray hole 311a (e.g., only through the spray hole 311a) corresponding to the corresponding battery cell 10. Thus, it may be possible to minimize or prevent thermal runaway from the cell in which an event occurs to another cell adjacent thereto.

Because the first fire extinguishing pipe 311 holds (e.g., is filled) with the first fire extinguishing agent 313 at atmospheric pressure, the thin film 311b blocking the spray holes 311a formed in the first fire extinguishing pipe 311 may not be damaged for a period of time (e.g., a long period of time of about 10 to 20 years). If the first fire extinguishing pipe 311 holds (e.g., is filled) with the first fire extinguishing agent 313 for a period of time (e.g., a long period of time) at a pressure higher than atmospheric pressure, the thin film 311b may be damaged, leading to unintended leakage of the first fire extinguishing agent to the outside.

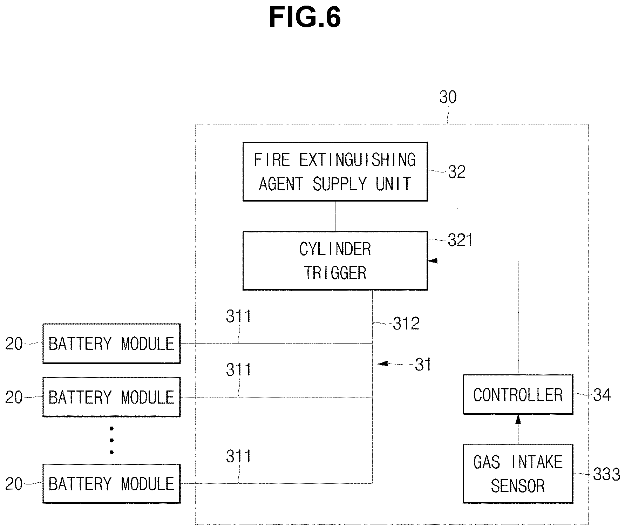

FIG. 6 is a block diagram of the configuration of the battery pack fire extinguishing system 30 configured to shorten a direct spray operation time according to an embodiment of the present disclosure.

As shown in FIG. 6, the battery pack fire extinguishing system 30 according to the embodiment may further include a gas intake sensor 333 and a controller 34. The gas intake sensor 333 may detect a vent gas from the battery cell 10, may convert a result of the detection into an electrical signal, and may transmit the electrical signal to the controller 34. Upon receiving the gas intake signal from the gas intake sensor 333, the controller 34 may transmit a control signal to a cylinder trigger 321 of the fire extinguishing agent supply unit 32 in order to operate the cylinder trigger 321.

As the cylinder trigger 321 operates, the second fire extinguishing agent in the fire extinguishing agent supply unit 32 may push the first fire extinguishing agent 313, and thus the first fire extinguishing agent 313 charged (e.g., charged in advance) in the fire extinguishing pipe 31 at atmospheric pressure may be primarily sprayed (e.g., sprayed first) to the battery cell 10 from which the vent gas is discharged without a substantial (or with reduced or shortened) delay time. Subsequently, the second fire extinguishing agent charged in the fire extinguishing agent supply unit 32 in a pressurized state may be secondarily sprayed (e.g., sprayed second) to the corresponding battery cell 10 through the fire extinguishing pipe 31.

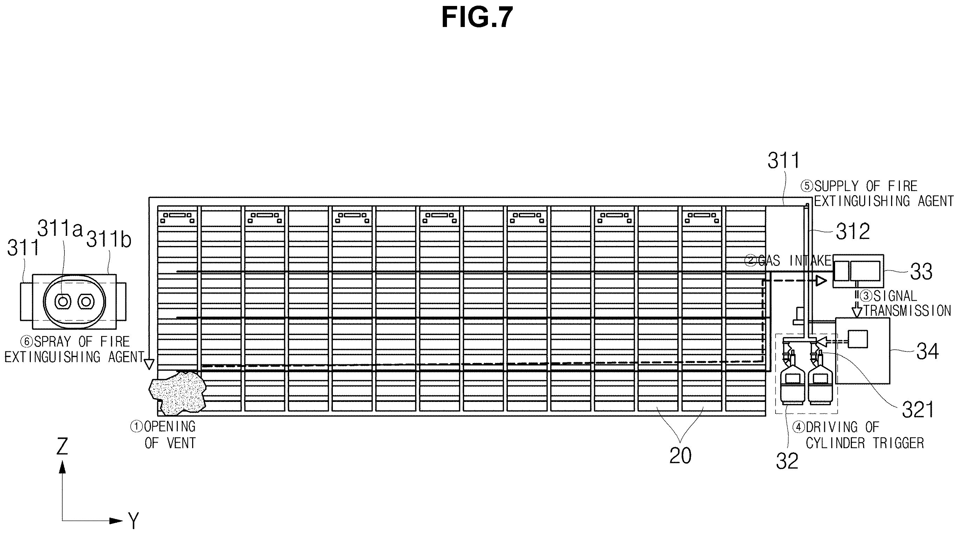

FIG. 7 is a schematic diagram of an operation of the battery pack fire extinguishing system 30 configured to shorten a direct spray operation time according to an embodiment of the present disclosure.

As shown in FIG. 7, if the vent hole 18 in a battery cell 10 in which an event occurs is opened at (1), gas may move from the vent hole 18 to the gas intake sensor 333 at (2), and the gas intake sensor 333 may transmit an electrical (e.g., a predetermined electrical) signal to the controller 34 at (3). Subsequently, as shown in FIG. 7, the controller 34 may drive the cylinder trigger 321 at (4), the fire extinguishing agent supply unit 32 may operate to supply the second fire extinguishing agent to the second fire extinguishing pipe 312 at (5), and the first fire extinguishing agent 313 charged (e.g., in advance) in the first fire extinguishing pipe 311 may be primarily sprayed (sprayed first) to the battery cell 10 in which an event occurs at (6). After the first fire extinguishing agent 313 is sprayed (e.g., completely), the second fire extinguishing agent supplied from the fire extinguishing agent supply unit 32 may be sprayed (e.g., continuously) to the battery cell 10 in which an event occurs.

In some embodiments, because the fire extinguishing agent is charged in advance in the fire extinguishing pipe 31 at atmospheric pressure, the fire extinguishing agent may be maintained or held (e.g., not leak) from the fire extinguishing pipe 31 even when the battery module or the battery pack is used for a period of time (e.g., a long period of time of about 10 to 20 years). However, if the fire extinguishing agent is charged in the fire extinguishing pipe 31 in a pressurized state (e.g., at a pressure higher than atmospheric pressure), the fire extinguishing agent may leak, leading to inconvenience of frequently re-filling the fire extinguishing pipe 31 with the fire extinguishing agent.

According to some embodiments, if an event occurs in a certain battery cell 10, the fire extinguishing agent may be sprayed (e.g., directly) to the corresponding battery cell 10 without a substantial (or with reduced or shortened) delay time to help prevent, reduce, or minimize the thermal runaway phenomenon. However, if the fire extinguishing agent is not charged (e.g., in advance) in the fire extinguishing pipe 31, it may take about 10 to 20 seconds for the fire extinguishing agent to reach the corresponding battery cell 10 from the fire extinguishing agent supply unit 32, and the thermal runaway phenomenon may occur in the battery pack.

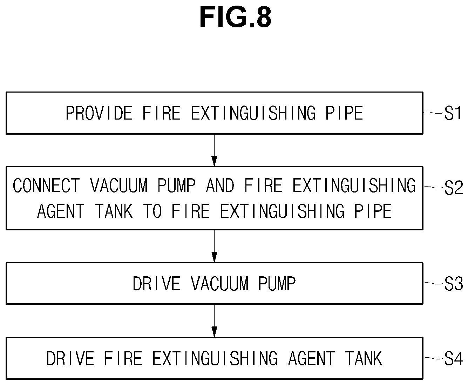

FIG. 8 is a flowchart of a method of filling the battery pack fire extinguishing system 30 configured to shorten a direct spray operation time with a fire extinguishing agent according to an embodiment of the present disclosure.

In the embodiment of FIG. 8, the method of filling the battery pack fire extinguishing system 30 with a fire extinguishing agent according to the embodiment includes providing a fire extinguishing pipe (S1), connecting a vacuum pump and a fire extinguishing agent tank to the fire extinguishing pipe (S2), driving the vacuum pump (S3), and driving the fire extinguishing agent tank (S4).

In providing the fire extinguishing pipe (S1), the fire extinguishing pipe 31 is mounted or positioned (e.g. located) above the battery cells 10 and connected to (e.g., extended from) the fire extinguishing agent supply unit 32.

In connecting the vacuum pump and the fire extinguishing agent tank to the fire extinguishing pipe (S2), a vacuum pump 35 and a fire extinguishing agent tank 36 may be connected to (e.g., extend from) the fire extinguishing pipe 31 via separate connection pipes.

In driving the vacuum pump (S3), the vacuum pump 35 is driven so that the fire extinguishing pipe 31 is vacuumed (e.g., to remove air and/or particles from the fire extinguishing pipe 31).

In driving the fire extinguishing agent tank (S4), the fire extinguishing agent tank 36 is driven so that the fire extinguishing agent is injected (e.g., naturally) into (or provided to) the fire extinguishing pipe 31 (e.g., in a vacuum state). In some embodiments, the fire extinguishing agent may be injected into (or provided to) the fire extinguishing pipe 31 until the fire extinguishing pipe 31 is in an atmospheric pressure state. The fire extinguishing pipe 31 may eventually be filled with the fire extinguishing agent at atmospheric pressure.

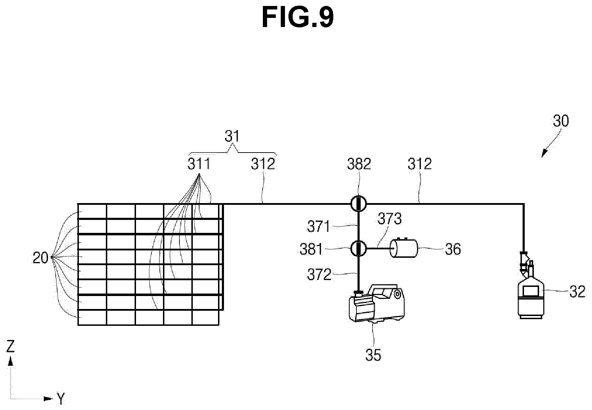

FIG. 9 is a schematic diagram of the method of FIG. 8 of filling the battery pack fire extinguishing system 30 configured to shorten a direct spray operation time with a fire extinguishing agent according to the embodiment of the present invention.

In the embodiment of FIG. 9, the connection pipes may include a first connection pipe 371 connected to (or extending from) the fire extinguishing pipe 31, a second connection pipe 372 connecting (or extending from) the vacuum pump 35 to the first connection pipe 371, and a third connection pipe 373 connecting (or extending from) the fire extinguishing agent tank 36 to the first connection pipe 371. In some embodiments, a first valve 381 is mounted to or placed at a point at which the first, second, and third connection pipes 371, 372, and 373 are connected to each other or meet. In some embodiments, the first valve 381 may include or be referred to as a three-way valve or a direction switching valve.

In some embodiments, operation of the vacuum pump 35 connects the first and second connection pipes 371 and 372 to each other by operation of the first valve 381, and disconnects the first and third connection pipes 371 and 373 from each other. Thus, the interior of the fire extinguishing pipe 31 may be vacuumed by operation of the vacuum pump 35.

In some embodiments, operation of the fire extinguishing agent tank 36 connects the first and third connection pipes 371 and 373 to each other by operation of the first valve 381, and disconnects the first and second connection pipes 371 and 372 from each other. Thus, the connection of the vacuum pump 35 to the fire extinguishing pipe 31 via the first and second connection pipes 371 and 372 may be interrupted, and the fire extinguishing agent in the fire extinguishing agent tank 36 may be supplied (e.g., naturally) to the fire extinguishing pipe 31 through the first and third connection pipes 371 and 373. In this way, the fire extinguishing pipe 31 may hold (e.g., be filled) with the fire extinguishing agent supplied from the fire extinguishing agent tank 36. This filling operation may be continued until the fire extinguishing pipe 31 (e.g., an interior of the fire extinguishing pipe) is in an atmospheric pressure state.

In some embodiments, a second valve 382 is mounted to or placed at a point at which the fire extinguishing pipe 31 and the first connection pipe 371 are connected to each other or meet. In some embodiments, operation of the vacuum pump 35 or the fire extinguishing agent tank 36 connects the fire extinguishing pipe 31 and the first connection pipe 371 to each other by operation of the second valve 382. In some embodiments stopping operation of the vacuum pump 35 and the fire extinguishing agent tank 36 disconnects the fire extinguishing pipe 31 and the first connection pipe 371 from each other by operation of the second valve 382. In some embodiments, the second valve 382 may include or be referred to as a three-way valve or a direction switching valve.

Embodiments of the present invention may provide a battery pack fire extinguishing system configured to shorten a direct spray operation time and a method of filling the same with a fire extinguishing agent. For example, the fire extinguishing agent may be charged (e.g., in advance) in the fire extinguishing pipe at atmospheric pressure. This may allow the fire extinguishing agent to be maintained or held in (e.g., not leak from) the fire extinguishing pipe even when the battery pack is used for a period of time (e.g., a long period of time of about 10 to 20 years). For example, if an event (e.g., fire) occurs in a certain battery cell, the fire extinguishing agent may be sprayed (e.g., directly) to the corresponding battery cell without a substantial (or with reduced or shortened) delay time, to minimize or prevent the thermal runaway phenomenon of the battery cells.

As is apparent from the above description, according to a battery pack fire extinguishing system configured to shorten a direct spray operation time and a method of filling the same with a fire extinguishing agent according to embodiments, because a fire extinguishing agent is charged in advance in a fire extinguishing pipe at atmospheric pressure, the fire extinguishing agent may not leak from the fire extinguishing pipe even when a battery pack is used for a long period of time (e.g., about 10 to 20 years). If an event occurs in a certain battery cell, the fire extinguishing agent may be directly sprayed to the corresponding battery cell without substantial (or with reduced or shortened) delay time, to help reduce or prevent the thermal runaway phenomenon of battery cells.

The above embodiments are only some embodiments for implementing a battery pack fire extinguishing system configured to shorten a direct spray operation time and a method of filling the same with a fire extinguishing agent, and are not limited to the disclosed embodiments. Thus, it is to be understood by those skilled in the art that various modifications can be made without departing from the scope of the present disclosure as defined by the following claims and their equivalents.

## Claims

1. A battery pack fire extinguishing system comprising:
one or more battery cells;
a fire extinguishing pipe located above the one or more battery cells, the fire extinguishing pipe holding a first fire extinguishing agent at atmospheric pressure; and
a fire extinguishing agent supply unit connected to the fire extinguishing pipe, the fire extinguishing agent supply unit being configured to supply a second fire extinguishing agent to the fire extinguishing pipe at a pressure higher than the atmospheric pressure.

2. The battery pack fire extinguishing system as claimed in claim 1, wherein at least one of the first fire extinguishing agent or the second fire extinguishing agent comprises sodium bicarbonate, potassium bicarbonate, ammonium phosphate, or aluminium sulfate.

3. The battery pack fire extinguishing system as claimed in claim 1 or claim 2, wherein the fire extinguishing pipe comprises:
a first fire extinguishing pipe located above the one or more battery cells; and
a second fire extinguishing pipe connecting the first fire extinguishing pipe to the fire extinguishing agent supply unit.

4. The battery pack fire extinguishing system as claimed in claim 3, wherein the first fire extinguishing pipe comprises:
one or more spray holes corresponding to one or more vent holes in the one or more battery cells; and
a film over the spray holes,
wherein a melting point of the film is lower than a melting point of the first fire extinguishing pipe.

5. The battery pack fire extinguishing system as claimed in claim 4, wherein the film is configured to melt responsive to vent gas from the battery cells.

6. The battery pack fire extinguishing system as claimed in any one of claims 1 to 5, further comprising:
a gas intake sensor configured to detect a vent gas from the battery cells; and
a controller configured to drive a cylinder trigger of the fire extinguishing agent supply unit based on receiving a gas intake signal from the gas intake sensor.

7. The battery pack fire extinguishing system as claimed in claim 6, wherein, based on detecting operation of the cylinder trigger, the first fire extinguishing agent charged in the fire extinguishing pipe is configured to be sprayed to the battery cells at a first point in time, and the second fire extinguishing agent charged in the fire extinguishing agent supply unit is configured to be sprayed to the battery cells through the fire extinguishing pipe at a second point in time later than the first point in time.

8. A method of filling a battery pack fire extinguishing system with a fire extinguishing agent, the method comprising:
providing a fire extinguishing pipe located above one or more battery cells and connected to a fire extinguishing agent supply unit;
connecting a vacuum pump and a fire extinguishing agent tank to the fire extinguishing pipe via one or more connection pipes;
driving the vacuum pump to vacuum the fire extinguishing pipe; and
driving the fire extinguishing agent tank to provide a fire extinguishing agent to the fire extinguishing pipe.

9. The method as claimed in claim 8, wherein the fire extinguishing agent is injected into the fire extinguishing pipe until an interior of the fire extinguishing pipe is in an atmospheric pressure state.

10. The method as claimed in claim 8 or claim 9, wherein the one or more connection pipes comprise:
a first connection pipe connected to the fire extinguishing pipe;
a second connection pipe connecting the vacuum pump to the first connection pipe;
a third connection pipe connecting the fire extinguishing agent tank to the first connection pipe; and
a first valve placed where the first, second, and third connection pipes meet,
wherein, operation of the vacuum pump connects the first connection pipe and the second connection pipe to each other via operation of the first valve, and disconnects the first connection pipe and the third connection pipe from each other, and
wherein operation of the fire extinguishing agent tank connects the first connection pipe and the third connection pipe to each other via operation of the first valve, and disconnects the first connection pipe and the second connection pipe from each other.

11. The method as claimed in claim 10, wherein the one or more connection pipes further comprise a second valve placed where the fire extinguishing pipe and the first connection pipe meet,
wherein, operation of the vacuum pump or the fire extinguishing agent tank connects the fire extinguishing pipe and the first connection pipe to each other via operation of the second valve, and
wherein, stopping operation of the vacuum pump and the fire extinguishing agent tank disconnects the fire extinguishing pipe and the first connection pipe from each other via operation of the second valve.
